(19) Europäisches Patentamt
European Patent Office
Office européen des brevets

(11) **EP 4 694 115 A1**

(12) **EUROPEAN PATENT APPLICATION**

(43) Date of publication:
**11.02.2026 Bulletin 2026/07**

(21) Application number: **25186518.4**

(22) Date of filing: **01.07.2025**

(51) International Patent Classification (IPC):
*H04N 19/109* (2014.01)  *H04N 19/19* (2014.01)
*H04N 19/61* (2014.01)  *H04N 19/176* (2014.01)
*H04N 19/52* (2014.01)  *H04N 19/105* (2014.01)
*H04N 19/147* (2014.01)

(52) Cooperative Patent Classification (CPC):
H04N 19/176; H04N 19/105; H04N 19/109;
H04N 19/147; H04N 19/19; H04N 19/52;
H04N 19/61

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.08.2024 US 202418798562**

(71) Applicant: **INTEL Corporation**
**Santa Clara, CA 95054 (US)**

(72) Inventors:
• **Xu, Qian**
**Folsom, 95630 (US)**
• **Hu, Jian**
**El Dorado Hills, 95762 (US)**
• **Matturu, Navyasree**
**Rancho Cordova, 95742 (US)**
• **Ryzhov, Dmitry E.**
**Mountain View, 94040 (US)**
• **Yedidi, Satya N.**
**Roseville, 95661 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **EFFICIENT MERGE CANDIDATE RANKING AND SELECTION IN VIDEO ENCODING**

(57)  A block of a video frame can be encoded using inter-prediction, and the motion vector of the block can be encoded based on a motion vector reference of a merge candidate. Some video codecs allow a large range of temporal and spatial neighbors to be considered as potential merge candidates. It is not practical to perform motion compensation and rate-distortion optimization for all possible merge candidates. To address this concern, a hardware-efficient process can be implemented to rank and select merge candidates. A reference frame priority list is applied to select a subset of potential reference frame combinations. An efficient top-K sorting algorithm is applied to identify merge candidates for each reference frame combination and keep top merge candidates with highest weights. Motion compensation and rate-distortion optimization are performed on the top merge candidates only.

EP 4 694 115 A1

**Description**

<u>Background</u>

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an exemplary implementation of inter-predication in an encoder, according to some embodiments of the disclosure.
FIG. 5 illustrates applying a reference frame priority list to reduce the number of potential reference frame combinations, according to some embodiments of the disclosure.
FIG. 6 illustrates a top-K sorting algorithm to identify top merge candidates with the highest weights, according to some embodiments of the disclosure.
FIG. 7 illustrates a method for making an inter-prediction decision, according to some embodiments of the disclosure.
FIG. 8 depicts a block diagram of an exemplary computing device, according to some embodiments of the disclosure.

<u>Detailed Description</u>

*<u>Overview</u>*

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably. In some cases, a frame may be partitioned into one or more blocks. Blocks may be used for block-based compression. Blocks may have different sizes, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks.

One of the tasks of an encoder in a video codec is to make encoding decisions based on a desired bitrate and/or desired (objective and/or subjective) quality. Making encoding decisions may include evaluating different options for encoding the data, such as a video frame or a block of the video frame and determining an optimal decision that may achieve the desired bitrate and/or quality. The chosen decision may be applied to encode the data, e.g., the video frame or the block of the video frame, to generate a portion of the bitstream. The chosen decision would be encoded in the bitstream to signal to a decoder how to decode the encoded bitstream in accordance with the encoding decisions which were made by the decoder. Modern codecs offer a wide range of options. While evaluating all possible options may yield the most optimal encoding decision, an encoder does not have unlimited resources to afford the complexity that would be required to evaluate each available option. While some codecs can achieve significant quality improvement with similar bitrates compared to earlier codecs, the improvements came at a cost of added complexity in the encoder and decoder. It is a technical challenge to reduce complexity in the encoder while making little to no impact to the quality of the video.

A block of a video frame can be encoded using inter-prediction. Inter-prediction (or inter-frame prediction) includes the process of encoding blocks using motion vectors, motion vector references, or motion vector predictors. Inter-prediction can take advantage of temporal redundancies to perform compression. A motion vector may be applied to a decoded block to generate predicted samples. Residues can be generated based on original samples and predicted samples. The motion vector and residues can be encoded in the bitstream. In some codecs, inter-prediction takes advantage of further redundancies by encoding the motion vector using a merge list or merge candidate list. A merge list may include one or more merge candidates. A merge candidate can include a motion vector reference. The motion vector reference may be a motion vector of a spatially neighboring block, or a motion vector of a temporally neighboring block. Rather than encoding the current motion vector of a current block itself, the current motion vector can be encoded using an index to the merge list to refer to a merge candidate with a motion vector reference. Using the merge list allows the encoder to take advantage of motion similarities of spatially and temporally neighboring blocks for motion vector prediction. In some cases, a motion vector is encoded with the index to the merge list without any motion vector residue. In some cases, a motion vector is encoded with the index to the merge list with a motion vector residue. The motion vector residue may be signaled using an efficient signaling scheme to encode the motion vector residue or offset relative to a motion vector reference/predictor in the merge list.

As discussed above, a motion vector of a block can be encoded based on a motion vector reference of a merge candidate. Some video codecs allow a large range of spatial neighbors to be considered as possible merge candidates. A video encoder may make an inter-prediction decision, e.g., determine which merge candidate in the possible merge candidates is the optimal option for encoding the motion vector of the block, by evaluating each possible merge candidate. To evaluate the possible merge candidate, motion compensation (MC) and rate-distortion optimization (RDO) may be performed for the possible merge candidates. MC and RDO are computationally expensive in terms of power, performance, and hardware gate count. It is not practical, and in some cases, infeasible, to perform MC and RDO for all possible merge candidates.

To address this technical challenge, a process can be implemented to reduce the number of possible reference frame combinations. A reference frame priority list is applied to select a subset of possible reference frame combinations. The reference frame priority list can be predefined empirically to identify the reference frame combinations that are most likely to have the highest encoding quality and the highest likelihood of the reference frame combination being selected. In one example, the reference frame priority list can reduce the number of possible reference frame combinations from 8 to 5.

To address this technical challenge, a process can be implemented to efficiently sort possible merge candidates by weight. An efficient top-K sorting algorithm is applied to sort merge candidates and keep top merge candidates with highest weights for each reference frame combination in the subset of potential reference frame combinations. MC and RDO are performed on the top merge candidates only. For a reference frame combination in the subset of potential reference frame combinations, merge candidates can be identified, and weights may be calculated for each merge candidate. The weights may be associated with the number of neighboring pixels the merge candidate has with the current block. The merge candidates for a reference frame combination may be sorted based on the weights. Implementing a top-K sorting algorithm, top-K merge candidates for the reference frame combination are kept and the process is repeated for additional reference frame combinations in the subset of potential reference frame combinations to identify the final top merge candidates for the block.

Some solutions involving identifying a final top 3-5 merge candidates in the manner described herein and applying MC and RDO on the top 3-5 merge candidates have produced quality gains in terms of bitrate reduction over other implementations without increasing workload on the MC and RDO hardware pipeline. Encoding quality gain has been observed to increase monotonically from sending top 3 merge candidates to sending top 5 merge candidates to MC and RDO.

Techniques for making inter-prediction decisions described and illustrated herein may be applied to a variety of codecs, such as AVC (Advanced Video Coding), HEVC (High Efficiency Video Coding), AV1 (AOMedia Video 1), and VVC (Versatile Video Coding). AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. VVC, also known as "ITU-T H.266", was finalized in 2020. While the techniques described herein relate to AV1, it is envisioned by the disclosure that the techniques may be applied to other codecs having intra-prediction decisions that are the same or similar to the ones made in AV1.

*Video compression*

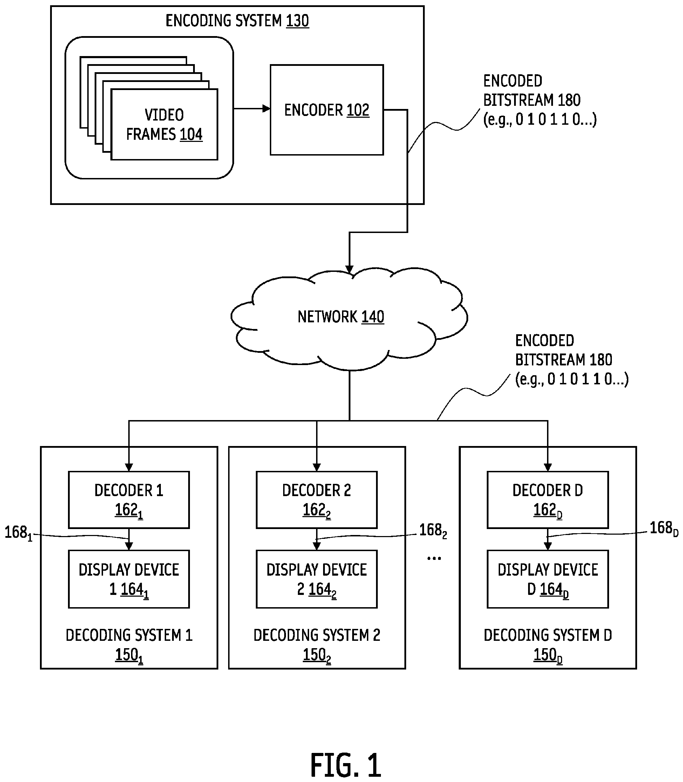

FIG. 1 illustrates encoding system 130 and one or more decoding systems $150_{1...D}$, according to some embodiments of the disclosure.

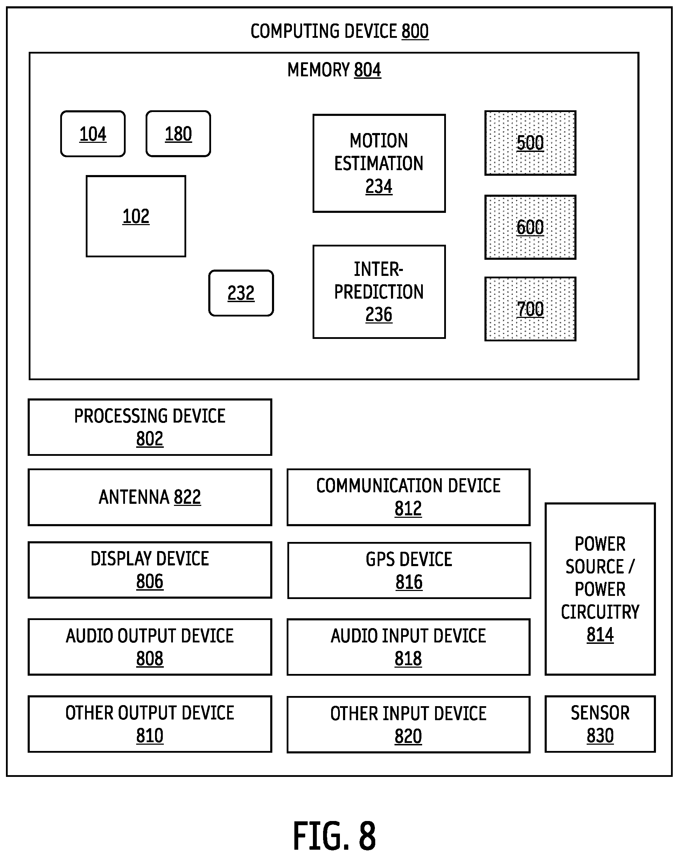

Encoding system 130 may be implemented on computing device 800 of FIG. 8. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of videos.

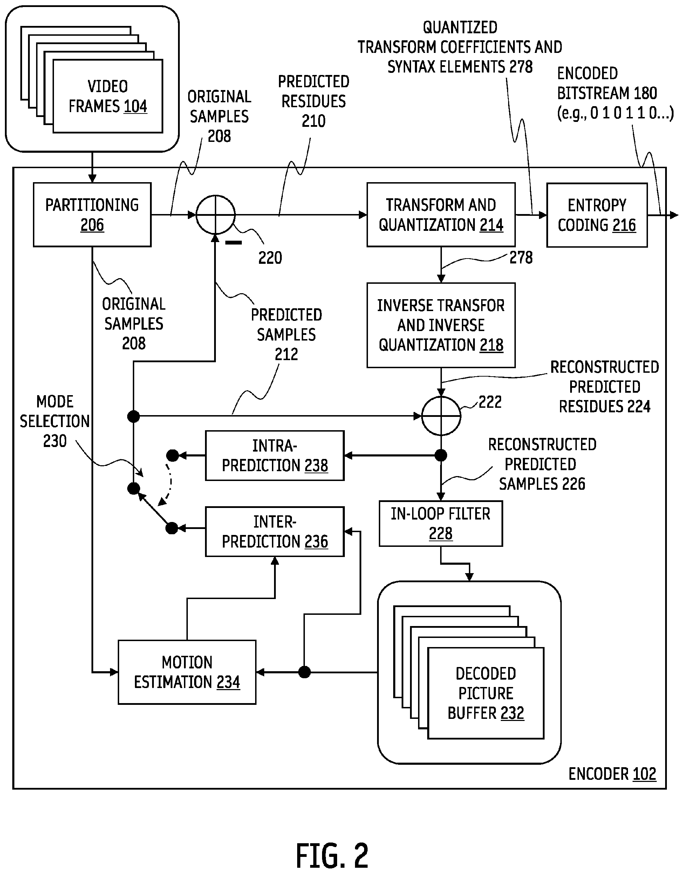

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems $150_{1...D}$, via network 140. Network 140 may be the Internet. Network 140 may include one or more of: cellular data networks, wireless data networks, wired data networks, cable Internet networks, fiber optic networks, satellite Internet networks, etc.

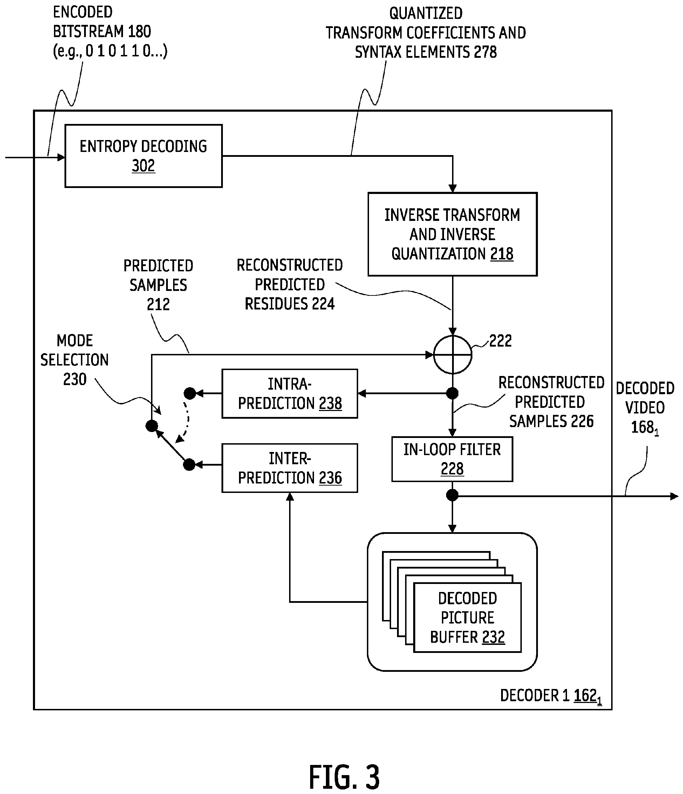

D number of decoding systems $150_{1...D}$ are illustrated. At least one of the decoding systems $150_{1...D}$ may be implemented on computing device 800 of FIG. 8. Examples of systems $150_{1...D}$ may include personal computers, mobile computing devices, gaming devices, augmented reality devices, mixed reality devices, virtual reality devices, televisions, etc. Each one of decoding systems $150_{1...D}$ may perform the process of decoding in video compression. Each one of decoding systems $150_{1...D}$ may include a decoder (e.g., decoder 1...D $162_{1...D}$), and one or more display devices (e.g., display device 1...D $164_{1...D}$). An exemplary implementation of a decoder, e.g., decoder 1 $162_1$, is illustrated in FIG. 3.

For example, decoding system 1 $150_1$, may include decoder 1 $162_1$ and a display device 1 $164_1$. Decoder 1 $162_1$ may implement a decoding process of video compression. Decoder 1 $162_1$ may receive encoded bitstream 180 and produce decoded video $168_1$. Decoded video $168_1$ may include a series of video frames, which may be a version or reconstructed version of video frames 104 encoded by encoding system 130. Display device 1 $164_1$ may output the decoded video $168_1$ for display to one or more human viewers or users of decoding system 1 $150_1$.

For example, decoding system 2 $150_2$, may include decoder 2 $162_2$ and a display device 2 $164_2$. Decoder 2 $162_2$ may implement a decoding process of video compression. Decoder 2 $162_2$ may receive encoded bitstream 180 and produce decoded video $168_2$. Decoded video $168_2$ may include a series of video frames, which may be a version or reconstructed version of video frames 104 encoded by encoding system 130. Display device 2 $164_2$ may output the decoded video $168_2$ for display to one or more human viewers or users of decoding system 2 $150_2$.

For example, decoding system D $150_D$, may include decoder D $162_D$ and display device D $164_D$. Decoder D $162_D$ may implement a decoding process of video compression. Decoder D $162_D$ may receive encoded bitstream 180 and produce decoded video $168_D$. Decoded video $168_D$ may include a series of video frames, which may be a version or reconstructed version of video frames 104 encoded by encoding system 130. Display device D $164_D$ may output the decoded video $168_D$ for display to one or more human viewers or users of decoding system D $150_D$.

*Video encoder*

FIG. 2 illustrates encoder 102 to encode video frames 104 and output encoded bitstream 180, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. Large blocks may be referred to as superblocks, macroblocks, or coding tree blocks (CTBs). Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into coding tree units (CTUs) of size 128x128 pixels. Partitioning 206 may divide a CTU using a quadtree partitioning structure into four coding units (CUs). Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-prediction 238 may support a number of diverse predictors, e.g., 56 different predictors. In one codec, intra-prediction 238 may support a number of diverse predictors, e.g., 95 different predictors. Some predictors, e.g., directional predictors, may capture different spatial redundancies in directional textures. Pixel values of a block can be predicted using a directional predictor in intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra-block copy, color palette, multiple-reference line, intra sub-partition, matrix-based intra-prediction (matrix coefficients may be defined by offline training using neural networks), angular prediction, wide-angle prediction, cross-component linear model, template matching, etc. In some cases, intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

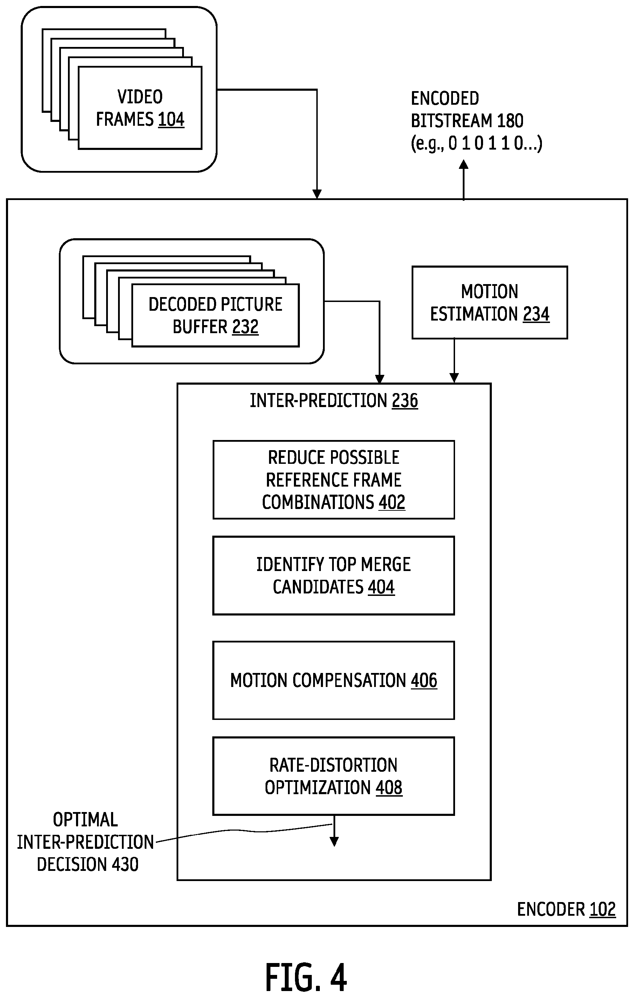

Motion estimation 234 and inter-prediction 236 may predict samples of a block from samples of previously encoded frames, e.g., reference frames in decoded picture buffer 232. Motion estimation 234 and inter-prediction 236 may perform operations to make inter-prediction decisions or inter-prediction decisions. Exemplary implementations and operations of motion estimation 234 and inter-prediction 236 are illustrated in FIGS. 4-7.

Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and inter-prediction 236 may perform motion compensation, which may involve identifying a suitable reference block and a suitable motion predictor (e.g., motion vector reference, or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames (or a number of reference frame combinations) for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-prediction 236. Motion estimation 234 may implement compound reference frame prediction mode where two reference frames with two corresponding motion predictors are used for inter-prediction 236. In one codec, motion estimation 234 may implement techniques for searching and identifying good reference frame(s) (or good reference frame combinations) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-prediction 236 and optionally applying an interpolation filter. In some cases, inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Inter-prediction 236 may have one or more coding tools at its disposal for encoding a block using inter-prediction. Inter-prediction 236 may make an intra-prediction decision that chooses or selects an optimal coding tool to be used, e.g., using rate-distortion optimization. The coding tools may include different ways to encode a motion vector for a current block. One coding tool to encode a motion vector is regular merge mode, which involves encoding a motion vector using a merge list. Regular merge mode may suffer from inaccuracies due to differences between the current motion vector and the motion vector references/predictors in the merge list. Another coding tool to encode a motion vector is to encode a motion vector predictor (e.g., a reference to a decoded motion vector predictor in a merge list) and a motion vector residue (or residual motion vector). In some contexts, this coding tool is referred to as adaptive motion vector prediction (AMVP) mode. While AMVP can signal and encode the current motion vector more accurately, additional bits are used to encode the motion vector residue and the syntax elements in AMVP mode would incur larger bit rate cost. Another encoding tool to encode a motion vector is merge mode with motion vector difference (MMVD) mode, which involves encoding a motion vector using a merge list and a motion vector difference (MVD). Applying signaling scheme for encoding the MVD may be more efficient than encoding the motion vector residue itself. Therefore, MMVD mode may offer a solution that compromises accuracy and overhead. Various coding tools for encoding a motion vector in inter-prediction 236 may involve applying a search process to identify possible merge candidates for each possible reference frame combination and ranking of the possible merge candidates to build a merge list or a merge candidates list. Motion compensation and rate-distortion optimization may be applied to the possible merge candidates in the merge list or merge candidates list to determine the optimal merge candidate to be used for encoding a given block.

FIGS. 4-7 illustrate exemplary operations and implementations of inter-prediction 236 and approaches for reducing complexity in the encoder's inter-prediction decision making process.

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transform (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), Luma Mapping with Chroma Scaling (LMCS) filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

*Video decoder*

FIG. 3 illustrates decoder 1 $162_1$ to decode an encoded bitstream and output a decoded video, according to some embodiments of the disclosure. Decoder 1 $162_1$ may include one or more of: signal processing operations and data processing operations, including entropy decoding, inverse transform, inverse quantization, inter and intra-prediction, in-loop filtering, etc. Decoder 1 $162_1$ may have signal and data processing operations that mirror the operations performed in the encoder. Decoder 1 $162_1$ may apply signal and data processing operations that are signaled in encoded bitstream 180 to reconstruct the video. Decoder 1 $162_1$ may receive encoded bitstream 180 and generate and output decoded video $168_1$ having a plurality of video frames. The decoded video $168_1$ may be provided to one or more display devices for display to one or more human viewers. Decoder 1 $162_1$ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 $162_1$ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video $168_1$.

*Challenges associated with an abundance of merge candidates*

As discussed with FIG. 2, inter-prediction 236 may evaluate a variety of coding tools that can most efficiently encode a current motion vector for a current block in a current frame. The coding tools may include AMVP mode, regular merge mode, and MMVD mode. The coding tools may use a list of merge candidates, motion vector references, motion vector predictors, or motion vector predictor candidates. Such a list may be referred to as a candidate list, a merge list, or a merge candidate list. Based on the list, a merge candidate that best represents or predicts the current motion vector can be identified using an index to the merge list. The index may be signaled in the encoded bitstream to enable a decoder to reconstruct the current motion vector. The merge list enables spatio-temporal redundancy in motion vectors to be exploited.

The generation of the merge list may include identifying merge candidates for each possible reference frame combination. Redundant merge candidates may be removed. In some cases, the generation of the merge list may include identifying other types of motion vector candidates (e.g., combined bi-predictive merge candidate and zero motion candidate). The generation of the merge list may include collating merge candidates. The merge candidates may be added to the merge list. The merge candidates may be ranked ordered in a merge list from the most likely to be chosen to the least likely to be chosen. The merge list may be indexed, such that a merge candidate (e.g., having a motion vector reference/predictor) in the list may be referenced using an index (or bits that correspond to the index) to the merge list.

Some modern codecs allow a much bigger range of spatial neighbors to be used as merge candidates when compared to older codecs. The possible spatial area can cover three 8x8 rows on TOP, three 8x8 columns on LEFT, plus TOPLEFT corner, TOPRIGHT corner, and BOTTOMLEFT corner, and any 8x8 block in the spatial area can be a possible merge candidate. On top of a large range of spatial neighbors to be considered, the merge list or merge candidate list may be produced based on the spatial area of each possible reference frame combination of the current block. In some modern codecs, a current block may have many possible reference frame combinations. A possible reference frame combination for a block can include a single reference frame or two reference frames selected from multiple reference frame lists. If there are M number of possible reference frame combinations and N number of possible merge candidates for each reference frame combination, the total number of possible merge candidates for a block is M*N. In some cases, there may be eight possible reference frame combinations and 33 possible merge candidates (or spatial neighbors) for each reference frame combination. The total number of possible merge candidates may be 8*33=264.

It is not practical, and in some cases, infeasible, to perform MC and RDO for all possible merge candidates, e.g., all M*N merge candidates. For example, an exorbitant amount of hardware computations would be required to evaluate 264 possible merge candidates and perform MC and RDO on all the possible merge candidates. The abundance of possible merge candidates in some modern codecs presents a challenge to implement an effective method to select a few merge candidates that are likely to have the best encoding efficiency. It would be more efficient to evaluate a few merge candidates (e.g., MC and RDO can be performed on the few merge candidates), rather than evaluating all M*N merge candidates. In some cases, hardware supporting an encoder may have capacity to perform RDO operations for just 3 to 5 merge candidates only. Therefore, the technical challenge may include finding a way to effectively and efficiently rank the possible merge candidates and select 3 to 5 merge candidates out of M*N possible merge candidates to evaluate.

To address this technical challenge, a process can be implemented to reduce the number of possible reference frame combinations (e.g., reduce the number M) using a predefined reference frame priority list and to find top-K merge candidates associated with each one of the reduced possible reference frame combinations having the highest weights in an efficient manner. The weights may be correlated with a number of spatial neighboring pixels a merge candidate has with the block. Implementations of the process are described in greater detail in FIGS. 4-7.

*Efficient inter-prediction implementation and inter-prediction decision processes*

FIG. 4 illustrates an exemplary implementation of inter-prediction 236 in an encoder, according to some embodiments of the disclosure. Inter-prediction 236 may include one or more of: reduce possible reference frame combinations 402, identify top merge candidates 404, motion compensation 406, and rate-distortion optimization 408.

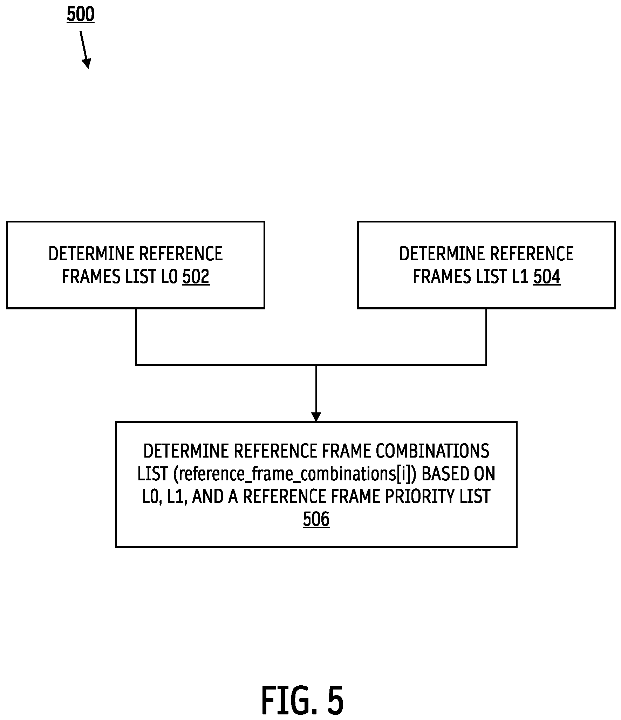

Reduce possible reference frame combinations 402 may implement a process to eliminate one or more reference frame combinations which are less likely to be selected as a reference frame combination. A block may be predicted based on information from a single reference frame, or a block may be predicted based on information from two reference frames (e.g., sometimes referred to as bi-prediction). In some embodiments, a block of a video frame may have two or more reference frames lists or lists of possible reference frames that can be used as a reference for the block. Reduce possible reference frame combinations 402 may determine a reference frame combinations list, reference_frame_combinations[i] for a block of a video frame. Reduce possible reference frame combinations 402 may determine a first reference frames list L0 and a second reference frames list L1. Possible reference frame combinations may be selected from one or more of the first reference frames list L0 and the second reference frames list L1 according to one or more values of a reference frame priority list. The reference frame priority list may have one or more values to indicate which frame from the first reference frame list L0 and/or which frame from the second reference frame list L1 to use as a reference frame combination. Reduce possible reference frame combinations 402 may apply a reference frame priority list to reduce the possible reference frame combinations. Reduce possible reference frame combinations 402 may reduce the possible reference frame combinations based on the reference frame priority list. The process is illustrated in FIG. 5.

Suppose the first reference frames list L0 has a maximum of f references, or reference frames, and the second reference frames list L1 has a maximum of g references, or reference frames. A valid reference frame combination may refer to one reference frame from L0 and one reference frame from L1. A valid reference frame combination may refer to one reference frame from L0 only. A valid reference frame combination may refer to one reference frame from L1 only. The total number of possible reference frame combinations based on L0 and L1 may be $M=f*g+f+g$.

Based on extensive experimentation and observation of the results of the experimentation of video encoding quality with respect to different reference frame combinations, (values of) a reference frame priority list can be predefined or predetermined and applied to reduce the number of reference frame combinations. In some cases, the reference frame priority list may specify a subset of the possible reference frame combinations. In some cases, the reference frame priority list may order the subset of the possible reference frame combinations in the order based on the likelihood of a reference frame combination being selected or used for inter-prediction. Values of the reference frame priority list may specify or indicate (or has information that specify or indicate) one or more reference frame combinations to be formed using the first reference frames list L0 and/or the second reference frames list L1. A value may include an index or reference to a reference frames list. A value may include specify a frame in a first reference frames list L0 and/or a frame in a second reference frames list L1.

If f=2 and g=2, then $M=2*2+2+2=8$. The first reference frames list may include 2 references or two reference frames, L0[0], and L0[1]. The second reference frames list may include 2 references or two reference frames, L1[0], and L1[1]. It is possible to reduce the number of possible reference frame combinations from M=8 to M'=5 through the use of a reference frame priority list. One example of a reference frame priority list may include two arrays as follows:

```
int list0_LDB[] = { 0, 0, 1, 1, 1 }

int list1_LDB[] = {-1, 0,-1, 0, 1 }
```

The two arrays of the reference frame priority list, list0_LDB[] and list1_LDB[], may be used for low delay bi-pred (LDB) type of inter-prediction. The first array list0_LDB[] may be used to select a reference frame or no reference frame from the first reference frame list L0. One or more values in the first array list0_LDB[] may reference a reference frame or no reference frame from the first reference frame list L0. The second array list1_LDB[] may be used to select a reference frame or no reference frame from the second reference frame list L1. One or more values in the second array list1_LDB[] may reference a reference frame or no reference frame from the second reference frame list L1. The values in the two arrays are indices to the first reference frames list L0 and the second reference frames list L1 respectively. Value of -1 indicates that a reference frame is not being referenced in that reference frames list for the reference frame combination. Using the above reference frame priority list can produce the following (priority) reference frame combinations when moving down the arrays in lockstep (from left to right) to M'=5 reference frame combinations:

```
reference_frame_combinations[i]= { {L0[0]},
                                   {L0[0], L1[1]},
                                   {L0[1]},
                                   {L0[1], L1[0]},
                                   {L0[1], L1[1] }
```

Another example of a reference frame priority list may include two arrays as follows:

```
int list0_RA[] = { 0, 0,-1, 1, 1 }

int list1_RA[] = { 0,-1, 0,-1, 1 }
```

The two arrays of the reference frame priority list, list0_RA[] and list1_RA[], may be used for random access (RA) type of inter-prediction. The first array list0_RA[] may be used to select a reference frame or no reference frame from the first reference frame list L0. One or more values in the first array list0_RA[] may reference a reference frame or no reference frame from the first reference frame list L0. The second array list1_RA[] may be used to select a reference frame or no reference frame from the second reference frame list L1. One or more values in the second array list1_RA[] may reference a reference frame or no reference frame from the second reference frame list L1. The values in the two arrays are indices to the first reference frames list L0 and the second reference frames list L1 respectively. Value of -1 indicates that a reference frame is not being referenced in that reference frames list for the reference frame combination. Using the above reference frame priority list can produce the following (priority) reference frame combinations when moving down the arrays in lockstep (from left to right) to M'=5 reference frame combinations:

```
reference_frame_combinations[i]= { {L0[0], L1[0]},

                                   {L0[0]},

                                   {L1[0]},

                                   {L0[1]},

                                   {L0[1], L1[0] }
```

Identify top merge candidates 404 may iterate through the reference frame combinations in reference_frame_combinations[i], to identify merge candidates. In some cases, identify top merge candidates 404 may, for a given reference frame combination in reference_frame_combinations[i], to identify up to N merge candidates. The merge candidates identified for each reference frame combination may be collected into a merge candidates stack of length M'*N. The merge candidates in the merge candidates stack may be sorted by weight. The weight may be associated with the count of spatial neighboring pixels a merge candidate has with the block.

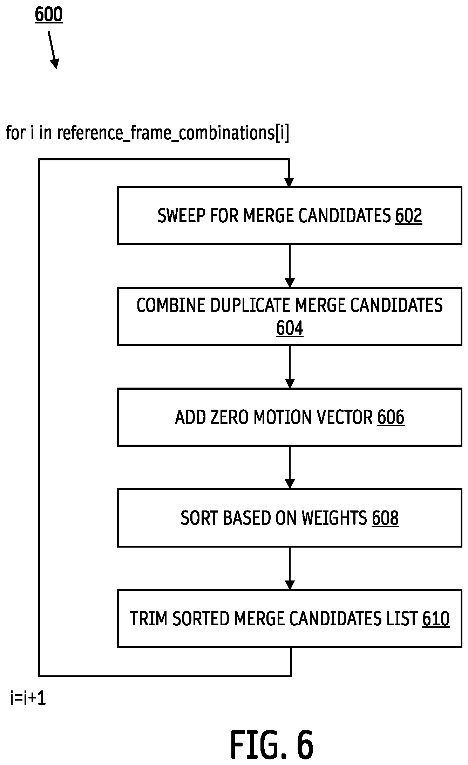

In some embodiments, identify top merge candidates 404 may instead perform a top-K sorting algorithm and maintain a merge candidates stack of size K with the top merge candidates having the highest weights tabulated so far. For a first reference frame combination in reference_frame_combinations[i], identify top merge candidates 404 may identify one or more merge candidates in the first reference frame combination. For the first reference frame combination in reference_frame_combinations[i], identify top merge candidates 404 may sort the one or more merge candidates based on one or more weights associated with the one or more merge candidates. For the first reference frame combination in reference_frame_combinations[i], identify top merge candidates 404 may maintain a list of one or more top merge candidates having one or more highest weights. The list of the one or more top merge candidates may be maintained in a merge candidates stack of a fixed size K, where merge candidates that do not have the highest weights may be removed from the merge candidates stack, and merge candidates that have the highest weights may be kept in the merge candidates stack. If top-K merge candidates with the highest weights are to be identified, the merge candidates stack can have the same fixed size of K. The identifying, the sorting, and maintaining are performed for a second reference frame combination in the reference frame combinations list, reference_frame_combinations[i]. the identifying, the sorting, and maintaining are performed for each reference frame combination in the reference frame combinations list, reference_frame_combinations[i] (e.g., for each index i in reference_frame_combinations[i]). The process is illustrated in FIG. 6.

While an iterative process is illustrated herein, it is envisioned that the identifying of merge candidates and sorting of the merge candidates by weight for individual reference frame combinations in the reference frame combinations list can be performed in parallel. The sorted merge candidate stacks produced in parallel can be merged together to form the final sorted merge candidate stack.

The one or more weights associated with the merge candidates can be correlated with a number of spatial neighboring pixels a merge candidate has with the block. The weight can be calculated using a suitable algorithm. A spatial merge candidate that is an immediate neighbor of the block can have a large weight (e.g., 640) assigned to the merge candidate, whereas a spatial merge candidate that is a non-immediate neighbor of the block can have small weight (e.g., 2) assigned to the merge candidate. The weight may be based on a dimension of the block associated with the merge candidate, e.g., a width or a height of the block associated with the merge candidate. The weight may be a multiple of the dimension of the block associated with the merge candidate. The weight may be positively correlated with the dimension of the block associated with the merge candidate. In some cases, the weight may have a default value for certain merge candidates. For some codecs, the weight may already be calculated for context determination or deriving inter-mode of the block. The same weight used for context determination or deriving inter-mode may be used for purposes of sorting merge candidates in identify top merge candidates 404. It was discovered that a large weight can indicate higher chances of the merge candidate being selected for encoding the motion vector of the block, or that a large weight can indicate the merge candidate being more useful (and thus should be evaluated). Conversely, a small weight can indicate lower chances of the merge candidate being selected for encoding the motion vector of the block, or that a small weight can indicate the merge candidate being less useful (and thus should not be evaluated).

One or more top merge candidates in the merge candidates stack identified by identify top merge candidates 404 can be evaluated. One or more top merge candidates may include 3-5 merge candidates having the highest weights. Other merge candidates that are not the top merge candidates or other merge candidates that do not have the highest weights are not evaluated to save computations in encoder 102.

Motion compensation may be performed by motion compensation 406 using the one or more top merge candidates. To perform MC for a top merge candidate, motion compensation 406 may fetch reference pixels from external memory (e.g., decoded picture buffer 232), apply a motion vector reference of a merge candidate, perform interpolation filtering, and determine residues for a possible merge candidate.

Rate-distortion optimization may be performed by rate-distortion optimization 408 using the one or more top merge candidates. RDO may include generating candidate bitstreams for the possible merge candidates by applying forward transform, inverse transform, forward quantization, and inverse quantization. RDO may further include determining bitrates of the candidate bitstreams and calculating errors (e.g., distortions) of the candidate bitstreams. Rate-distortion optimization 408 can determine a trade-off between the bitrate (e.g., a compression rate), and the distortion (e.g., quality, objective quality, subjective quality, etc.) introduced by the compression process. The goal of RDO is to make an optimal encoding decision (in this case, output optimal inter-prediction decision 430) that minimizes a rate-distortion cost function that balances bitrate and distortion in the following equation:

$$Cost = distortion + \lambda * bitrate \quad \textbf{(equation 1)}$$

*Cost* represents the rate-distortion cost. *distortion* represents the distortion (including one or more of, e.g., mean squared error, sum of absolute differences, sum of the transformed absolute differences, objective quality loss, subjective quality loss, etc.). *bitrate* represents the bitrate, or a number of bits to encode the data. $\lambda$ or lambda is an RDO parameter (sometimes referred to as the Lagrangian multiplier) that can control or adjust the relative importance of bitrate versus distortion in the rate-distortion cost function. A higher value for $\lambda$ means more emphasis on reducing the bitrate. A lower value for $\lambda$ means more emphasis on reducing distortion. Rate-distortion optimization 408 may determine a plurality of RD costs (e.g., according to equation 1) to evaluate different top merge candidates for encoding the motion vector of the block. Rate-distortion optimization 408 may determine optimal inter-prediction decision 430 on how to encode the motion vector (e.g., which top merge candidate to use) based on the RD costs. Rate-distortion optimization 408 may determine optimal inter-prediction decision 430 by selecting the top merge candidate that has a lowest RD cost.

Encoder 102 may apply the optimal inter-prediction decision 430 on reconstructed predicted samples (e.g., reconstructed predicted samples 226 of FIG. 2) to output predicted samples (e.g., predicted samples 212 of FIG. 2). Encoder 102 may encode the current motion vector of the block in encoded bitstream 180 according to optimal inter-prediction decision 430. Encoder 102 may encode the block using the merge candidates stack, or the list of the one or more top merge candidates to form a portion of encoded bitstream 180.

In some embodiments, a maximum size of the list of the one or more top merge candidates, or a maximum size of the merge candidates stack (e.g., corresponding to K) is based on a user setting, or is user configurable. In some embodiments, a maximum size of the list of the one or more top merge candidates, or a maximum size of the merge candidates stack (e.g., corresponding to K) is dependent on the hardware capability or available hardware resources of circuitry implementing encoder 102. In some embodiments, the maximum size of the list of the one or more top merge candidates or a maximum size of the merge candidates may be selected from three, four, and five. In some embodiments, the maximum size of the list of the one or more top merge candidates or a maximum size of the merge candidates may be three, four, or five.

## Using a reference frame priority list to reduce the number of possible reference frame combinations

FIG. 5 illustrates applying a reference frame priority list to reduce the number of potential reference frame combinations, according to some embodiments of the disclosure. The method 500 illustrated in FIG. 5 may be implemented in reduce possible reference frame combinations 402 of FIG. 4.

In 502, a first reference frames list L0 may be determined.

In 504, a second reference frames list L1 may be determined.

In 506, reference frame combinations list, e.g.,

reference_frame_combinations[i], representing a reduced set or a subset of all possible reference frame combinations for the block can be determined. The reference frame combinations list may be determined based on the first reference frames list L0, the second reference frames list L1, and a reference frame priority list. Detailed examples of a reference frame priority list and an application thereof to produce the reference frame combinations list have been described and illustrated in FIG. 4.

The result of method 500, the reference frame combinations list, e.g., reference_frame_combinations[i], may serve as a starting point for identifying merge candidates and finding top-K merge candidates.

*Hardware-efficient ranking and trimming of merge candidates*

FIG. 6 illustrates a top-K sorting algorithm to identify top merge candidates with the highest weights, according to some embodiments of the disclosure. The method 600 illustrated in FIG. 6 may be implemented in identify top merge candidates 404 of FIG. 4. The parts of the method 600 as illustrated may be performed for each reference frame combination in the reference frame combinations list. For an index i in reference_frame_combinations[i], perform parts of method 600, and increment index i by 1 (e.g., i=i+1).

In 602, for a first reference frame combination in the reference frame combinations list, a spatial region or area is swept to find valid or compliant merge candidates. In 602, one or more (valid or compliant) merge candidates in the first reference frame combination can be identified through a search process. Potential merge candidates in the first reference frame combination are evaluated to determine whether a merge candidate is a valid or compliant merge candidate. In 602, the one or more merge candidates in the first reference frame combination is determined to be inter-predicted and uses the same reference frame combination, i.e., the first reference frame combination for inter-prediction. In addition to identifying valid or compliant merge candidates, in 602, for the first reference frame combination in the reference frame combinations list, one or more weights associated with the one or more (valid or compliant) merge candidates can be calculated or determined. The one or more weights may be based on one or more dimensions corresponding to the one or more merge candidates respectively. Details relating to weight calculations are described with FIG. 4.

In 604, for the first reference frame combination in the reference frame combinations list, after identifying the one or more merge candidates in 602, at least two of the one or more merge candidates can be determined as duplicates (e.g., the merge candidates have the same motion vector predictor or motion vector reference). Duplicates may be present in the identified valid/compliant merge candidates in 602. Duplicates may be present in the identified valid/compliant merge candidates in 602 and in the running list of the one or more top merge candidates having the highest weights (e.g., a merge candidates stack). In 604, the at least two merge candidates that are duplicates can be combined. In some cases, this means that only one merge candidate exists in the list of one or more merge candidates or the merge candidates stack. In 604, combining the at least two merge candidates that are duplicates includes adding weights associated with the at least two merge candidates to determine a combined weight, and maintaining the at least two merge candidates that are duplicates as a single merge candidate having the combined weight.

In 606, for the first reference frame combination in the reference frame combinations list, a zero motion vector candidate may be generated. In some embodiments, a zero motion vector candidate is generated in response to too few merge candidates being identified for the first reference frame combination. The zero motion vector candidate can having a default weight. The zero motion vector candidate can be identified as one of the one or more merge candidates or included in the merge candidates stack.

In 608, for the first reference frame combination in the reference frame combinations list, the one or more merge candidates can be sorted based on the one or more weights associated with the one or more merge candidates.

In 610, for the first reference frame combination in the reference frame combinations list, a list of one or more top merge candidates having one or more highest weights is maintained, e.g., as the merge candidates stack. Maintaining the list of the one or more top merge candidates can include removing one or more merge candidates that do not have the one or more highest weights. A list of identified and sorted merge candidates may be trimmed or clamped to have at most K number of merge candidates with the highest weights. Sorting and trimming at each iteration with a reference frame combination is distinguishable from sorting and clamping (at the end) a list of merge candidates generated based on all the reference frame combinations. Sorting and trimming at each iteration (e.g., maintaining a short list of merge candidates) at each iteration with a reference frame combination is much more hardware-efficient. In addition, the top-K sorting approach can be a greedier searching algorithm. This approach can result in far lower gate count and lower power consumption, while being able to maintain encoding quality.

Index i may be incremented such that parts of method 600 may be performed for the next reference frame combination in the reference frame combinations list. The parts of method 600 may be performed until there are no further reference frame combinations I the reference frame combinations list.

*Methods for making an inter-prediction decision*

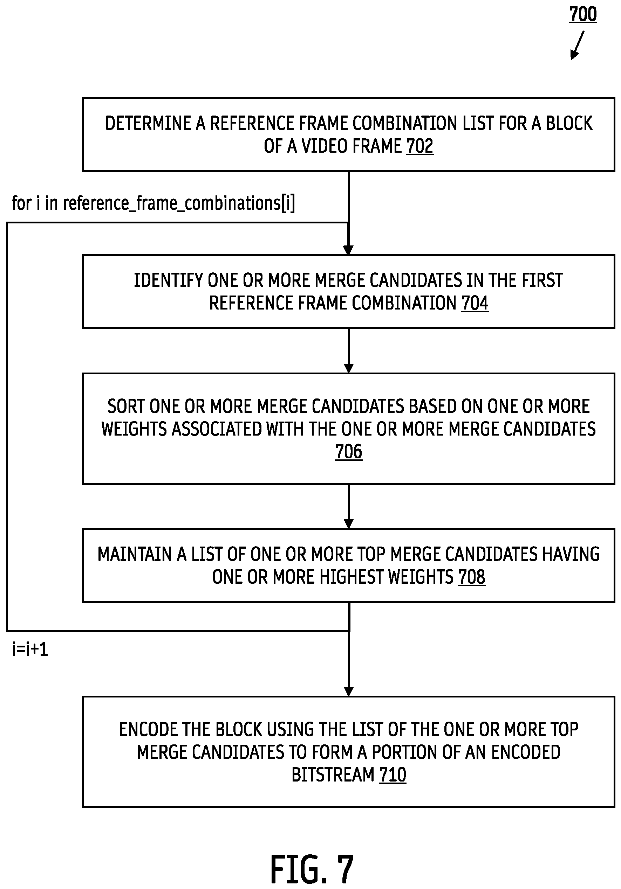

FIG. 7 illustrates method 700 for making an inter-prediction decision, according to some embodiments of the disclosure. Method 700 may be performed by one or more components in inter-prediction 236 of FIG. 4. One or more operations of method 700 may be encoded as instructions on memory 804, which can be executed by processing device 802 to carry out the one or more operations of method 700.

In 702, a reference frame combinations list for a block of a video frame may be determined.

In 704, for a first reference frame combination in the reference frame combinations list, one or more merge candidates in the first reference frame combination may be identified.

In 706, for the first reference frame combination in the reference frame combinations list, the one or more merge candidates may be sorted based on one or more weights associated with the one or more merge candidates. The one or more weights can be correlated with a number of spatial neighboring pixels a merge candidate has with the block.

In 708, a list of one or more top merge candidates having one or more highest weights may be maintained.

Method 700 may include performing 704, 706, and 708 for one or more further reference frame combinations in the reference frame combinations list.

In 710, the block may be encoded using the list of the one or more top merge candidates to form a portion of an encoded bitstream.

*Exemplary computing device*

FIG. 8 is a block diagram of an apparatus or a system, e.g., an exemplary computing device 800, according to some embodiments of the disclosure. One or more computing devices 800 may be used to implement the functionalities described with the FIGS. and herein. A number of components are illustrated in FIG. 8 can be included in computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, and the computing device 800 may include interface circuitry for coupling to the one or more components. For example, the computing device 800 may not include a display device 806, and may include display device interface circuitry (e.g., a connector and driver circuitry) to which a display device 806 may be coupled. In another set of examples, the computing device 800 may not include an audio input device 818 or an audio output device 808 and may include audio input or output device interface circuitry (e.g., connectors and supporting circuitry) to which an audio input device 818 or audio output device 808 may be coupled.

The computing device 800 may include a processing device 802 (e.g., one or more processing devices, one or more of the same type of processing device, one or more of different types of processing device). The processing device 802 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 802 may include a CPU, a GPU, a quantum processor, a machine learning processor, an artificial intelligence processor, a neural-network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 804 includes one or more non-transitory computer-readable storage media. In some embodiments, memory 804 may include memory that shares a die with the processing device 802.

In some embodiments, memory 804 includes one or more non-transitory computer-readable media storing instructions executable to perform operations described herein, such as operations illustrated in FIGS. 1-7, method 500, method 600, and method 700. In some embodiments, memory 804 includes one or more non-transitory computer-readable media storing instructions executable to perform one or more operations of encoder 102. In some embodiments, memory 804 includes one or more non-transitory computer-readable media storing instructions executable to perform one or more operations of inter-prediction 236. The instructions stored in memory 804 may be executed by processing device 802.

In some embodiments, memory 804 may store data, e.g., data structures, binary data, bits, metadata, files, blobs, etc., as described with the FIGS. and herein. Memory 804 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 804 may include one or more non-transitory computer-readable media storing one or more of: data received and/or data generated by inter-prediction 236 of FIGS. 2 and 4. Memory 804 may include one or more non-transitory computer-readable media storing decoded picture buffer 232. Memory 804 may include one or more non-transitory computer-readable media storing one or more of: data received and/or data generated by method 500 of FIG. 5. Memory 804 may include one or more non-transitory computer-readable media storing one or more of: data received and/or data generated by method 600 of FIG. 6. Memory 804 may include one or more non-transitory computer-readable media storing one or more of: data received and/or data generated by method 700 of FIG. 7.

In some embodiments, the computing device 800 may include a communication device 812 (e.g., one or more communication devices). For example, the communication device 812 may be configured for managing wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 812 may operate in accordance with other wireless protocols in other embodiments. The computing device 800 may include an antenna 822 to facilitate wireless communications and/or to receive other wireless communications (such as radio frequency transmissions). Computing device 800 may include receiver circuits and/or transmitter circuits. In some embodiments, the communication device 812 may manage wired communications, such as electrical, optical, or any other suitable communication protocols (e.g., the Ethernet). As noted above, the communication device 812 may include multiple communication chips. For instance, a first communication device 812 may be dedicated to shorter-range wireless communications such as Wi-Fi or Bluetooth, and a second communication device 812 may be dedicated to longer-range wireless communications such as global positioning system (GPS), EDGE, GPRS, CDMA, WiMAX, LTE, EV-DO, or others. In some embodiments, a first communication device 812 may be dedicated to wireless communications, and a second communication device 812 may be dedicated to wired communications.

The computing device 800 may include power source / power circuitry 814. The power source / power circuitry 814 may include one or more energy storage devices (e.g., batteries or capacitors) and/or circuitry for coupling components of the computing device 800 to an energy source separate from the computing device 800 (e.g., DC power, AC power, etc.).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include a sensor 830 (or one or more sensors). The computing device 800 may include corresponding interface circuitry, as discussed above). Sensor 830 may sense physical phenomenon and translate the physical phenomenon into electrical signals that can be processed by, e.g., processing device 802. Examples of sensor 830 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 800 may include another output device 810 (or corresponding interface circuitry, as discussed above). Examples of the other output device 810 may include an audio codec, a video codec, a printer, a wired or wireless transmitter for providing information to other devices, haptic output device, gas output device, vibrational output device, lighting output device, home automation controller, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 800 may be any other electronic device that processes data.

*Select examples*

Example 1 provides a method, including determining a reference frame combinations list for a block of a video frame; for a first reference frame combination in the reference frame combinations list, identifying one or more merge candidates in the first reference frame combination; sorting the one or more merge candidates based on one or more weights associated with the one or more merge candidates; and maintaining a list of one or more top merge candidates having one or more highest weights; and encoding the block using the list of the one or more top merge candidates to form a portion of an encoded bitstream.

Example 2 provides the method of example 1, where the one or more weights are correlated with a number of spatial neighboring pixels a merge candidate has with the block.

Example 3 provides the method of example 1 or 2, where determining the reference frame combinations list includes determining a first reference frames list and a second reference frames list; and selecting from one or more of the first reference frames list and the second reference frames list according to one or more values of a reference frame priority list.

Example 4 provides the method of any one of examples 1-3, where the identifying, the sorting, and the maintaining are performed for a second reference frame combination in the reference frame combinations list.

Example 5 provides the method of any one of examples 1-4, where maintaining the list of one or more top merge candidates includes removing one or more ones of the one or more merge candidates that do not have the one or more highest weights.

Example 6 provides the method of any one of examples 1-5, where a maximum size of the list of the one or more top merge candidates is three, four, or five.

Example 7 provides the method of any one of examples 1-6, where encoding the block using the list of the one or more top merge candidates includes performing motion compensation based on the list of the one or more top merge candidates; and performing rate-distortion calculations based on the list of the one or more top merge candidates to select an optimal merge candidate to encode the block.

Example 8 provides the method of any one of examples 1-7, where identifying the one or more merge candidates in the first reference frame combination includes determining that the one or more merge candidates in the first reference frame combination is inter-predicted and uses the first reference frame combination.

Example 9 provides the method of any one of examples 1-8, further including for the first reference frame combination in the reference frame combinations list, determining the one or more weights associated with the one or more merge candidates based on one or more dimensions corresponding to the one or more merge candidates respectively.

Example 10 provides the method of any one of examples 1-9, further including for the first reference frame combination in the reference frame combinations list, after identifying the one or more merge candidates, determining that at least two of the one or more merge candidates are duplicates, and combining the at least two of the one or more merge candidates that are duplicates.

Example 11 provides the method of example 10, where combining the at least two of the one or more merge candidates that are duplicates includes adding weights associated with the at least two merge candidates to determine a combined weight; and maintaining the at least two merge candidates that are duplicates as a single merge candidate having the combined weight.

Example 12 provides the method of any one of examples 1-11, further including for the first reference frame combination in the reference frame combinations list, generating a zero motion vector candidate having a default weight and identifying the zero motion vector candidate as one of the one or more merge candidates.

Example 13 provides one or more non-transitory computer-readable media storing instructions that, when executed by one or more processors, cause the one or more processors to: determine a reference frame combinations list for a block of a video frame; for a first reference frame combination in the reference frame combinations list, identify one or more merge candidates in the first reference frame combination; sort the one or more merge candidates based on one or more weights associated with the one or more merge candidates; and maintain a list of one or more top merge candidates having one or more highest weights; and encode the block using the list of the one or more top merge candidates to form a portion of an encoded bitstream.

Example 14 provides the one or more non-transitory computer-readable media of example 13, where the one or more weights are correlated with a number of spatial neighboring pixels a merge candidate has with the block.

Example 15 provides the one or more non-transitory computer-readable media of example 13 or 14, where determining the reference frame combinations list includes determining a first reference frames list and a second reference frames list; and selecting from one or more of the first reference frames list and the second reference frames list according to one or more values of a reference frame priority list.

Example 16 provides the one or more non-transitory computer-readable media of any one of examples 13-15, where the identifying, the sorting, and the maintaining are performed for a second reference frame combination in the reference frame combinations list.

Example 17 provides the one or more non-transitory computer-readable media of any one of examples 13-16, where maintaining the list of one or more top merge candidates includes removing one or more ones of the one or more merge candidates that do not have the one or more highest weights.

Example 18 provides the one or more non-transitory computer-readable media of any one of examples 13-17, where a maximum size of the list of the one or more top merge candidates is three, four, or five.

Example 19 provides the one or more non-transitory computer-readable media of any one of examples 13-18, where encoding the block using the list of the one or more top merge candidates includes performing motion compensation based on the list of the one or more top merge candidates; and performing rate-distortion calculations based on the list of the one or more top merge candidates to select an optimal merge candidate to encode the block.

Example 20 provides the one or more non-transitory computer-readable media of any one of examples 13-19, where identifying the one or more merge candidates in the first reference frame combination includes determining that the one or more merge candidates in the first reference frame combination is inter-predicted and uses the first reference frame combination.

Example 21 provides the one or more non-transitory computer-readable media of any one of examples 13-20, where the instructions further cause the one or more processors to: for the first reference frame combination in the reference frame combinations list, determine the one or more weights associated with the one or more merge candidates based on one or more dimensions corresponding to the one or more merge candidates respectively.

Example 22 provides the one or more non-transitory computer-readable media of any one of examples 13-21, where the instructions further cause the one or more processors to: for the first reference frame combination in the reference frame combinations list, after identifying the one or more merge candidates, determine that at least two of the one or more merge candidates are duplicates, and combine the at least two of the one or more merge candidates that are duplicates.

Example 23 provides the one or more non-transitory computer-readable media of example 22, where combining the at least two of the one or more merge candidates that are duplicates includes adding weights associated with the at least two merge candidates to determine a combined weight; and maintaining the at least two merge candidates that are duplicates as a single merge candidate having the combined weight.

Example 24 provides the one or more non-transitory computer-readable media of any one of examples 13-23, where the instructions further cause the one or more processors to: for the first reference frame combination in the reference frame combinations list, generate a zero motion vector candidate having a default weight and identifying the zero motion vector candidate as one of the one or more merge candidates.

Example 25 provides an apparatus, including one or more processors; and one or more non-transitory computer-readable memories to store instructions, where the instructions, when executed by the one or more processors, cause the one or more processors to: determine a reference frame combinations list for a block of a video frame; for a first reference frame combination in the reference frame combinations list, identify one or more merge candidates in the first reference frame combination; sort the one or more merge candidates based on one or more weights associated with the one or more merge candidates; and maintain a list of one or more top merge candidates having one or more highest weights; and encode the block using the list of the one or more top merge candidates to form a portion of an encoded bitstream.

Example 26 provides the apparatus of example 25, where the one or more weights are correlated with a number of spatial neighboring pixels a merge candidate has with the block.

Example 27 provides the apparatus of example 25 or 26, where determining the reference frame combinations list includes determining a first reference frames list and a second reference frames list; and selecting from one or more of the first reference frames list and the second reference frames list according to one or more values of a reference frame priority list.

Example 28 provides the apparatus of any one of examples 25-27, where the identifying, the sorting, and the maintaining are performed for a second reference frame combination in the reference frame combinations list.

Example 29 provides the apparatus of any one of examples 25-28, where maintaining the list of one or more top merge candidates includes removing one or more ones of the one or more merge candidates that do not have the one or more highest weights.

Example 30 provides the apparatus of any one of examples 25-29, where a maximum size of the list of the one or more top merge candidates is three, four, or five.

Example 31 provides the apparatus of any one of examples 25-30, where encoding the block using the list of the one or more top merge candidates includes performing motion compensation based on the list of the one or more top merge candidates; and performing rate-distortion calculations based on the list of the one or more top merge candidates to select an optimal merge candidate to encode the block.

Example 32 provides the apparatus of any one of examples 25-31, where identifying the one or more merge candidates in the first reference frame combination includes determining that the one or more merge candidates in the first reference frame combination is inter-predicted and uses the first reference frame combination.

Example 33 provides the apparatus of any one of examples 25-32, where the instructions further cause the one or more processors to: for the first reference frame combination in the reference frame combinations list, determine the one or more weights associated with the one or more merge candidates based on one or more dimensions corresponding to the one or more merge candidates respectively.

Example 34 provides the apparatus of any one of examples 25-33, where the instructions further cause the one or more processors to: for the first reference frame combination in the reference frame combinations list, after identifying the one or more merge candidates, determine that at least two of the one or more merge candidates are duplicates, and combine the at least two of the one or more merge candidates that are duplicates.

Example 35 provides the apparatus of example 34, where combining the at least two of the one or more merge candidates that are duplicates includes adding weights associated with the at least two merge candidates to determine a combined weight; and maintaining the at least two merge candidates that are duplicates as a single merge candidate having the combined weight.

Example 36 provides the apparatus of any one of examples 25-35, where the instructions further cause the one or more processors to: for the first reference frame combination in the reference frame combinations list, generate a zero motion vector candidate having a default weight and identifying the zero motion vector candidate as one of the one or more merge candidates.

Example A is an apparatus comprising means for carrying out any one of the methods according to examples 1-12.

Example B includes an encoder as described and illustrated herein.

Example C includes inter-prediction, e.g., inter-prediction 236, as described and illustrated herein.

*Variations and other notes*

Although the operations of the example method shown in and described with reference to FIGS. 4-7 are illustrated as occurring once each and in a particular order, it will be recognized that some operations may be performed in any suitable order and repeated as desired. Furthermore, the operations illustrated in FIGS. 4-7 or other FIGS. may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method, comprising:

   determining a reference frame combinations list for a block of a video frame;
   for a first reference frame combination in the reference frame combinations list,

   identifying one or more merge candidates in the first reference frame combination;
   sorting the one or more merge candidates based on one or more weights associated with the one or more merge candidates; and
   maintaining a list of one or more top merge candidates having one or more highest weights; and

   encoding the block using the list of the one or more top merge candidates to form a portion of an encoded bitstream.

2. The method of claim 1, wherein the one or more weights are correlated with a number of spatial neighboring pixels a merge candidate has with the block.

3. The method of claim 1 or 2, wherein determining the reference frame combinations list comprises:

   determining a first reference frames list and a second reference frames list; and
   selecting from one or more of the first reference frames list and the second reference frames list according to one or more values of a reference frame priority list.

4. The method of any one of claims 1-3, wherein the identifying, the sorting, and the maintaining are performed for a second reference frame combination in the reference frame combinations list.

5. The method of any one of claims 1-4, wherein maintaining the list of one or more top merge candidates comprises removing one or more ones of the one or more merge candidates that do not have the one or more highest weights.

6. The method of any one of claims 1-5, wherein a maximum size of the list of the one or more top merge candidates is three, four, or five.

7. The method of any one of examples 1-6, wherein encoding the block using the list of the one or more top merge candidates comprises:

   performing motion compensation based on the list of the one or more top merge candidates; and
   performing rate-distortion calculations based on the list of the one or more top merge candidates to select an optimal merge candidate to encode the block.

8. The method of any one of claims 1-7, wherein identifying the one or more merge candidates in the first reference frame combination comprises:
   determining that the one or more merge candidates in the first reference frame combination is inter-predicted and uses the first reference frame combination.

9. The method of any one of claims 1-8, further comprising:
   for the first reference frame combination in the reference frame combinations list, determining the one or more weights associated with the one or more merge candidates based on one or more dimensions corresponding to the one or more merge candidates respectively.

10. The method of any one of claims 1-9, further comprising:
    for the first reference frame combination in the reference frame combinations list, after identifying the one or more merge candidates, determining that at least two of the one or more merge candidates are duplicates, and combining the at least two of the one or more merge candidates that are duplicates.

11. The method of claim 10, wherein combining the at least two of the one or more merge candidates that are duplicates comprises:

    adding weights associated with the at least two merge candidates to determine a combined weight; and
    maintaining the at least two merge candidates that are duplicates as a single merge candidate having the combined weight.

12. The method of any one of claims 1-11, further comprising:
    for the first reference frame combination in the reference frame combinations list, generating a zero motion vector candidate having a default weight and identifying the zero motion vector candidate as one of the one or more merge candidates.

13. One or more non-transitory computer-readable media storing instructions that, when executed by one or more processors, cause the one or more processors to perform a method according to any one of claims 1-12.

14. An apparatus comprising means for carrying out any one of the methods according to examples 1-12.

FIG. 1

FIG. 2

ENCODED
BITSTREAM 180
(e.g., 0 1 0 1 1 0...)

QUANTIZED
TRANSFORM COEFFICIENTS AND
SYNTAX ELEMENTS 278

ENTROPY DECODING
302

INVERSE TRANSFORM
AND INVERSE
QUANTIZATION 218

PREDICTED
SAMPLES
212

RECONSTRUCTED
PREDICTED
RESIDUES 224

MODE
SELECTION
230

222

INTRA-
PREDICTION 238

RECONSTRUCTED
PREDICTED
SAMPLES 226

DECODED
VIDEO
168₁

INTER-
PREDICTION 236

IN-LOOP FILTER
228

DECODED
PICTURE
BUFFER 232

DECODER 1 162₁

FIG. 3

VIDEO
FRAMES 104

ENCODED
BITSTREAM 180
(e.g., 0 1 0 1 1 0...)

DECODED PICTURE
BUFFER 232

MOTION
ESTIMATION 234

INTER-PREDICTION 236

REDUCE POSSIBLE
REFERENCE FRAME
COMBINATIONS 402

IDENTIFY TOP MERGE
CANDIDATES 404

MOTION COMPENSATION 406

RATE-DISTORTION
OPTIMIZATION 408

OPTIMAL
INTER-PREDICTION
DECISION 430

ENCODER 102

FIG. 4

<u>500</u>

┌─────────────────────────┐        ┌─────────────────────────┐
│   DETERMINE REFERENCE   │        │   DETERMINE REFERENCE   │
│  FRAMES LIST L0 <u>502</u>    │        │  FRAMES LIST L1 <u>504</u>    │
└─────────────────────────┘        └─────────────────────────┘

┌──────────────────────────────────────────────┐
│   DETERMINE REFERENCE FRAME COMBINATIONS      │
│  LIST (reference_frame_combinations[i]) BASED ON │
│  L0, L1, AND A REFERENCE FRAME PRIORITY LIST  │
│                   <u>506</u>                       │
└──────────────────────────────────────────────┘

# FIG. 5

600

for i in reference_frame_combinations[i]

```
┌──────────────────────────────────────────┐
│   SWEEP FOR MERGE CANDIDATES 602          │
└──────────────────────────────────────────┘
                    │
                    ▼
┌──────────────────────────────────────────┐
│   COMBINE DUPLICATE MERGE CANDIDATES      │
│                 604                        │
└──────────────────────────────────────────┘
                    │
                    ▼
┌──────────────────────────────────────────┐
│   ADD ZERO MOTION VECTOR 606              │
└──────────────────────────────────────────┘
                    │
                    ▼
┌──────────────────────────────────────────┐
│   SORT BASED ON WEIGHTS 608               │
└──────────────────────────────────────────┘
                    │
                    ▼
┌──────────────────────────────────────────┐
│   TRIM SORTED MERGE CANDIDATES LIST 610   │
└──────────────────────────────────────────┘
```

i=i+1

## FIG. 6

700

DETERMINE A REFERENCE FRAME COMBINATION LIST FOR A BLOCK OF A VIDEO FRAME 702

for i in reference_frame_combinations[i]

IDENTIFY ONE OR MORE MERGE CANDIDATES IN THE FIRST REFERENCE FRAME COMBINATION 704

SORT ONE OR MORE MERGE CANDIDATES BASED ON ONE OR MORE WEIGHTS ASSOCIATED WITH THE ONE OR MORE MERGE CANDIDATES 706

MAINTAIN A LIST OF ONE OR MORE TOP MERGE CANDIDATES HAVING ONE OR MORE HIGHEST WEIGHTS 708

i=i+1

ENCODE THE BLOCK USING THE LIST OF THE ONE OR MORE TOP MERGE CANDIDATES TO FORM A PORTION OF AN ENCODED BITSTREAM 710

# FIG. 7

COMPUTING DEVICE 800

MEMORY 804

104 | 180

102

232

MOTION
ESTIMATION
234

INTER-
PREDICTION
236

500

600

700

PROCESSING DEVICE
802

ANTENNA 822

DISPLAY DEVICE
806

AUDIO OUTPUT DEVICE
808

OTHER OUTPUT DEVICE
810

COMMUNICATION DEVICE
812

GPS DEVICE
816

AUDIO INPUT DEVICE
818

OTHER INPUT DEVICE
820

POWER
SOURCE /
POWER
CIRCUITRY
814

SENSOR
830

# FIG. 8

Europäisches Patentamt
European Patent Office
Office européen des brevets

# EUROPEAN SEARCH REPORT

**Application Number**

EP 25 18 6518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI MUCHEN ET AL: "Low-complexity merge candidate decision for fast HEVC encoding", 2013 IEEE INTERNATIONAL CONFERENCE ON MULTIMEDIA AND EXPO WORKSHOPS (ICMEW), IEEE, 15 July 2013 (2013-07-15), pages 1-6, XP032494511, DOI: 10.1109/ICMEW.2013.6618409 [retrieved on 2013-10-02] * Sec. 2.1, 3.1; figure 4 * | 1-14 | INV. H04N19/109 H04N19/19 H04N19/61 H04N19/176 H04N19/52 H04N19/105 H04N19/147 |
| A | Benjamin Bross ET AL: "Chapter 5 - Inter-Picture Prediction in HEVC" In: "High Efficiency Video Coding (HEVC) : Algorithms and Architectures", 1 January 2014 (2014-01-01), Springer International Publishing, XP055461237, pages 113-140, DOI: 10.1007/978-3-319-06895-4__5, * Sec. 5.2.2.2, 5.2.2.5; figure 5.2 * | 1-14 | |
| A | KIM TAE SUNG ET AL: "A Highly Utilized Hardware-Based Merge Mode Estimation with Candidate Level Parallel Execution for High-Efficiency Video Coding", JOURNAL OF SIGNAL PROCESSING SYSTEMS, SPRINGER, US, vol. 90, no. 5, 22 July 2017 (2017-07-22), pages 743-757, XP036499203, ISSN: 1939-8018, DOI: 10.1007/S11265-017-1268-0 [retrieved on 2017-07-22] * Abstract, Sec. 2.1, 2.2, 4.2, 6; figures 6, 7 * | 1-14 | |

**TECHNICAL FIELDS SEARCHED (IPC)**

H04N

The present search report has been drawn up for all claims

| Place of search | Date of completion of the search | Examiner |
|---|---|---|
| The Hague | 9 December 2025 | Satti, Shahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)